(19) Europäisches Patentamt
European Patent Office
Office européen des brevets

(11) **EP 2 882 979 B1**

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(51) Int Cl.:
***F16F 15/131*** *(2006.01)*     ***F16F 15/134*** *(2006.01)*

(21) Anmeldenummer: **13735319.9**

(22) Anmeldetag: **12.07.2013**

(86) Internationale Anmeldenummer:
**PCT/EP2013/064753**

(87) Internationale Veröffentlichungsnummer:
**WO 2014/026809 (20.02.2014 Gazette 2014/08)**

(54) **TORSIONSSCHWINGUNGSDÄMPFERANORDNUNG MIT LEISTUNGSVERZWEIGUNG**

SPLIT TORQUE TORSIONAL VIBRATION DAMPER ARRANGEMENT

ENSEMBLE AMORTISSEUR DE VIBRATIONS DE TORSION À DÉRIVATION DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2012 DE 102012214363**

(43) Veröffentlichungstag der Anmeldung:
**17.06.2015 Patentblatt 2015/25**

(73) Patentinhaber: **ZF Friedrichshafen AG**
**88046 Friedrichshafen (DE)**

(72) Erfinder:
• **LORENZ, Daniel**
**97688 Bad Kissingen (DE)**
• **WEIGAND, Thomas**
**97990 Weikersheim (DE)**
• **HÖCHE, Tobias**
**97461 Hofheim i. UFr. (DE)**
• **RIDDER, Martin**
**97421 Schweinfurt (DE)**
• **MANGER, Alexander**
**97508 Grettstadt (DE)**

(56) Entgegenhaltungen:
**DE-A1-102011 075 243    DE-A1-102011 075 244**
**DE-A1-102011 105 022**

EP 2 882 979 B1

**Beschreibung**

Ausführungsbeispiele der vorliegenden Erfindung befassen sich mit Torsionsschwingungsdämpferanordnungen, insbesondere mit Torsionsschwingungsdämpferanordnungen, in denen eine Leistungsverzweigung stattfindet.

In Antriebssträngen, insbesondere von mit Brennkraftmaschinen betriebenen Fahrzeugen, kommt es häufig zu Drehungleichförmigkeiten in Form von Schwankungen des von der Kurbelwelle abgegebenen Drehmoments bzw. der abgegebenen Drehzahl. Dies ist unter anderem darin begründet, dass in Brennkraftmaschinen nur in diskreten Zeitabständen eine Energieeinleitung, beispielsweise durch Zünden eines Benzin-Luft-Gemisches, erfolgt, die in einer Rotationsbewegung resultiert. Durch den zeitdiskreten Energieeintrag unterliegt sowohl das von der Kurbelwelle abgegebene Drehmoment als auch die Drehzahl der Kurbelwelle Schwankungen bzw. Schwingungen um einen mittleren Wert. Diese Schwankungen sollen nachfolgend allgemein als Drehungleichförmigkeiten verstanden werden, welche zu Torsionsschwingungen im Antriebsstrang führen können, also zu Oszillationen der Drehzahl, die einer Rotation mit konstanter Drehzahl überlagert sind.

Derartige Drehungleichförmigkeiten können im Fahrbetrieb spürbar sein, und sollen weitestgehend eliminiert bzw. gedämpft werden. Zu deren Dämpfung sind eine Reihe von Technologien bekannt. Beispielsweise kann durch den Einsatz von Kraft- bzw. Energiespeichern ein Teil der bei einer Drehungleichförmigkeit auftretenden Energie zwischengespeichert werden, um diese darauffolgend in den Antriebsstrang derart abzugeben, dass ein geglätteter Drehzahl- bzw. Drehmomentverlauf erreicht wird. Beispiele für solche Systeme sind Zweimassenschwungräder und sogenannte Tilger, die ein Massenpendel darstellen, bei dem aufgrund der Drehungleichförmigkeit eine Auslenkung einer schwingenden Masse entgegen der Fliehkraft erfolgt, die schwingende Masse also parallel und entgegengesetzt zur Richtung der Fliehkraft oszilliert.

Ein neuerer Ansatz ist das Verwenden von leistungsverzweigenden Systemen, bei denen das vom Antriebsaggregat erzeugte Drehmoment parallel über einen ersten Drehmomentübertragungsweg und über einen zweiten Drehmomentübertragungsweg übertragen wird. Solche Systeme sind mit der DE 10 2011 075 244 A1 und mit der DE 10 2011 075 243 A1 bekannt. Die beiden Drehmomentübertragungswege münden in einer Koppelanordnung, die das mittels der unterschiedlichen Drehmomentübertragungswege übertragene Drehmoment wieder zusammenführt. Durch eine Phasenschieberanordnung zum Bewirken einer Phasenverschiebung zwischen Torsionsschwingungen, die über den ersten Drehmomentübertragungsweg zu der Koppelanordnung übertragen werden und den Torsionsschwingungen, die über den zweiten Drehmomentübertragungsweg zu der Koppelanordnung übertragen werden, kann eine Dämpfung oder Eliminierung der Torsionsschwingungen erreicht werden. Eine Eliminierung gelingt in Ausnahmefällen beispielsweise dann, wenn die Phasenverschiebung 180° beträgt.

Aufgrund der kontinuierlichen Anstrengungen, die Energieeffizienz von Fahrzeugen zu verbessern, werden häufig Antriebsstränge konzipiert, die von Motoren mit niedriger Drehzahl oder verkleinertem Hubraum ("Downspeeding" und "Downsizing") angetrieben werden. Der immer weiter in den Fokus rückende niedrige Drehzahlbereich führt zu steigenden Anregungen von Drehungleichförmigkeiten. Zusätzlich werden neue Quellen von Drehungleichförmigkeiten geschaffen, beispielsweise durch Motoren mit Zylinderabschaltung, Start-/Stopp-Systemen und/oder Fahrzeuge mit unterschiedlichen Hybridisierungsstufen. Dies wiederum erfordert Torsionsschwingungsdämpferanordnungen, die in ihrer Leistungsfähigkeit bzw. der Fähigkeit, Drehungleichförmigkeiten zu dämpfen, deutlich über denjenigen der heutigen Systeme liegen, die also eine verbesserte Dämpfung von Torsionsschwingungen ermöglichen.

Ausführungsbeispiele der vorliegenden Erfindung ermöglichen dies, indem eine leistungsverzweigende Torsionsschwingungsdämpferanordnung zum Übertragen einer Rotation von einer Antriebsseite zu einer Abtriebsseite eine Phasenschieberanordnung verwendet, die eine mit der Phasenschieberanordnung erzielbare maximale Phasenverschiebung bewirkt, die von einer Rotationsgeschwindigkeit der übertragenden Rotation abhängig ist. Mittels der Torsionsschwingungsdämpferanordnung wird das Drehmoment zwischen der Antriebsseite und der Abtriebsseite parallel über einen ersten und zweiten Drehmomentübertragungsweg übertragen, wobei mittels einer Koppelanordnung der erste Drehmomentanteil, der über den ersten Drehmomentübertragungsweg übertragen wird und der zweite Drehmomentanteil, der über den zweiten Drehmomentübertragungsweg übertragen wird, wieder überlagert wird, um abtriebsseitig das Gesamtdrehmoment bereitzustellen. Die Phasenschieberanordnung bewirkt eine Phasenverschiebung zwischen den Torsionsschwingungen, die über den ersten Drehmomentübertragungsweg übertragen werden und den Torsionsschwingungen, die über den zweiten Drehmomentübertragungsweg übertragen werden, wobei von der Phasenschieberanordnung eine erzielbare maximale Phasenverschiebung bewirkt wird, die von der Rotationsgeschwindigkeit der übertragenden Rotation abhängig ist.

Dies kann zu einer besseren Dämpfung der Drehungleichförmigkeiten bzw. der Torsionsschwingungen über einen größeren dynamischen Bereich führen, da die erzielbare maximale Phasenverschiebung von der Rotationsgeschwindigkeit abhängt, sodass diese nicht nur bei einer vorgegebenen Drehzahl erzielt wird sondern innerhalb eines begrenzten Drehzahlbandes. Mit anderen Worten ermöglichen es Ausführungsbeispiele der Erfindung durch Verwendung einer Phasenschieberanordnung mit einer erzielbaren maximale Phasenverschiebung, die von der Rotationsgeschwindigkeit der übertragenden Rotation abhängig ist, eine unter den mechanischen Randbedingungen optimale Dämpfung von Drehungleichförmigkeiten bzw. Torsionsschwingungen über einen erweiterten Drehzahlbereich der mittels der Torsionsschwingungsdämpferanordnung übertragenen Rotation zu erzielen. Als Torsions- bzw. Rotationsschwingung soll dabei diejenige Schwingung verstanden werden, um die der Antrieb relativ zu einer mittleren Rotationsgeschwindigkeit schwingt. Mit anderen Worten ist die tatsächliche Rotation die Summe der gewünschten gleichförmigen Rotation und der dieser überlagerten Torsionsschwingung.

Gemäß den Ausführungsbeispielen der Erfindung ist also die maximale mit der Phasenschieberanordnung erzielbare Phasenverschiebung, d. h. der minimale Abstand zur vollständig gegenphasigen Bewegung mit einer Phasenverschiebung von 180°, von der Rotationsgeschwindigkeit abhängig. Dies kann dazu führen, dass die bei der maximalen Phasenverschiebung maximal mögliche Dämpfung der Rotationsschwingung über einen breiteren Drehzahlbereich erzielt werden kann.

Bei Ausführungsbeispielen, bei denen der erste und der zweite Drehmomentanteil unterschiedlich ist, also bei denen über den ersten Drehmomentübertragungsweg ein anderer Drehmomentanteil übertragen wird wie über den zweiten Drehmomentübertragungsweg, kann ein sogenannter Auslöschpunkt, also diejenige Drehzahl, bei der nach der konstruktiven Auslegung der Torsionsschwingungsdämpferanordnung eine vollständige Kompensation der Rotationsschwingungen auftritt, auch zu einer Phasenverschiebung korrespondieren, die ungleich 180° ist. Die Phasencharakteristik der Phasenschieberanordnung kann unter Berücksichtigung der Abstimmung der Leistungsverzweigung über die zwei Drehmomentübertragungswege derart angepasst werden, dass sich die optimale erzielbare Torsionsschwingungsdämpfung bzw. Drehschwingungsdämpfung über einen breiteren Drehzahlbereich erstreckt. Mit anderen Worten kann der Auslöschpunkt von der Drehzahl abhängig werden, sich zu dieser proportional verhalten bzw. sich zumindest innerhalb eines begrenzten Drehzahlbandes nahe der momentanen Rotationsdrehzahl befinden.

Gemäß einigen Ausführungsbeispielen umfasst die Phasenschieberanordnung ein schwingungsfähiges System mit einer an die Antriebsseite angebundenen Primärseite und einer an die Abtriebsseite angebundenen Sekundärseite. Die Primärseite ist um eine Rotationsachse drehbar bezüglich der Sekundärseite, wobei die relative Drehung zwischen Primärseite und Sekundärseite gegen die Wirkung einer zwischen der Primärseite und der Sekundärseite angeordneten Federanordnung erfolgt. Das schwingungsfähige System ist also durch die Massen der Primärseite, der Sekundärseite und die Steifigkeit bzw. Dimensionierung der Federn der Federanordnung bestimmt. Gemäß einigen Ausführungsbeispielen wird die Resonanzfrequenz des schwingungsfähigen Systems abhängig von der Rotationsgeschwindigkeit der mittels der Torsionsschwingungsdämpferanordnung übertragenen Rotation verändert, sodass sich eine verbesserte Torsionsschwingungsdämpfung über einen erweiterten Drehzahlbereich erzielen lässt.

Gemäß einigen Ausführungsbeispielen der vorliegenden Erfindung wird die von der Rotationsgeschwindigkeit abhängige Resonanzfrequenz zumindest teilweise dadurch realisiert, dass sich eine Steifigkeit der Federanordnung abhängig von der Rotationseigenschaft bzw. Rotationsfrequenz ändert.

Zum Zusammenführen des ersten Drehmomentanteils und des zweiten Drehmomentanteils in der Koppelanordnung, die als ein Summationsgetriebe ausgebildet ist, werden vorzugsweise Anordnungen wie ein Planetengetriebe, ein Hebelgetriebe oder ein ähnliches Getriebe verwendet, über die der erste Drehmomentanteil und der zweite Drehmomentanteil der unterschiedlichen Drehmomentübertragungswege zusammengeführt werden.

Dies kann gemäß einigen Ausführungsbeispielen dadurch erreicht werden, dass eine oder mehrere Federn einer Mehrzahl von Federn der Federanordnung derart gelagert sind, dass sich ein radialer Abstand zwischen der Rotationsachse und der jeweiligen Feder in einer auf der Rotationsachse senkrecht stehenden radialen Richtung in Abhängigkeit von der Rotationsgeschwindigkeit verändern kann. Eine Veränderung der radialen Position der Feder führt, bei ansonsten identischer Federkraft, zu einer Veränderung der Hebelverhältnisse der Torsionsschwingungsdämpferanordnung und mithin auf effiziente Art und Weise zu einer Rotationsgeschwindigkeitsabhängigkeit der Resonanzfrequenz des schwingungsfähigen Systems der Phasenschieberanordnung.

Bei alternativen Ausführungsbeispielen umfasst die Federanordnung eine Mehrzahl von entlang eines Umfangs in Reihe angeordneten Federn, wobei zumindest zwei zueinander benachbarte Federn durch eine in Umfangsrichtung starre Fliegeranordnung voneinander getrennt werden. Eine solche Fliegeranordnung kann sich dadurch auszeichnen, dass diese mit einer von der Rotationsgeschwindigkeit abhängigen Kopplungsstärke an die Primärseite und/oder an die Sekundärseite angebunden sein kann bzw. anbindbar ist. Gemäß einigen Ausführungsbeispielen hemmt bzw. dämpft die Fliegeranordnung beispielsweise durch Reibung zusätzlich die Schwingungsfähigkeit des Systems, d. h. mit zunehmender Kopplung der Fliegeranordnung wird das System steifer, was unter anderem auch eine rotationsgeschwindigkeitsabhängige Resonanzfrequenz des schwingungsfähigen Systems bewirkt. Eine Kopplung mit variabler bzw. drehzahlabhängiger Kopplungsstärke umfasst selbstverständlich auch den Fall, das bei einer bestimmten Drehzahl oder innerhalb eines Drehzahlbereiches keine reibungsvermittelte oder andersartige Anbindung zwischen der Fliegeranordnung und der Primärseite und/oder der Sekundärseite besteht.

Die Fliegeranordnung bzw. die im Vorhergehenden diskutierte, bezüglich ihrer radialen Position veränderliche Feder erzeugt einen zusätzlichen Freiheitsgrad, der zur Abstimmung des Systems, insbesondere dessen Phasenverhaltens, verwendet werden kann, wodurch eine Torsionsschwingungsdämpferanordnung mit verbesserter Charakteristik bereit gestellt werden kann.

Gemäß einigen weiteren Ausführungsbeispielen sind zueinander benachbarte Federn in der Umfangsrichtung mittels Fliegeranordnungen miteinander verbunden, die untereinander mit einer von der Rotationsgeschwindigkeit abhängigen Kopplungsstärke, beispielsweise durch Reibung, koppelbar sind. Dies kann die Anzahl der Freiheitsgrade zur Abstimmung des gesamten Systems weiter erhöhen. Gemäß einigen Ausführungsbeispielen kann somit beispielsweise eine Feder, die zwischen zwei benachbarten Fliegeranordnungen eingespannt ist, vollständig aus dem schwingungsfähigen System ausgekoppelt werden, wenn die beiden Fliegeranordnungen sich gegenseitig sperren oder verblocken, wenn also die Kopplung untereinander so stark wird, dass eine Relativbewegung zwischen den beiden Fliegeranordnungen unmöglich wird, was auch ein Verhindern einer Deformation der zwischen den beiden Fliegeranordnungen befindlichen Feder zur Folge hat.

Bevorzugte Ausführungsbeispiele der vorliegenden Erfindung werden nachfolgend, Bezug nehmend auf die beigefügten Figuren, näher erläutert. Es zeigen:

Fig. 1 einen Halbschnitt durch ein Ausführungsbeispiel einer Torsionsschwingungsdämpferanordnung;

Fig. 2 eine Ansicht auf ein Ausführungsbeispiel einer Phasenschieberanordnung mit einer rotationsabhängigen Phasencharakteristik;

Fig. 3 eine perspektivische Ansicht auf eine Mehrzahl von Fliegeranordnungen, wie sie in dem Ausführungsbeispiel von Fig. 2 verwendet werden;

Fig. 4 ein weiteres Ausführungsbeispiel eines Phasenschiebers mit rotationsabhängiger Charakteristik; und

Fig. 5 eine Kennlinie, die eine Phasencharakteristik einer Torsionsschwingungsdämpferanordnung beschreibt.

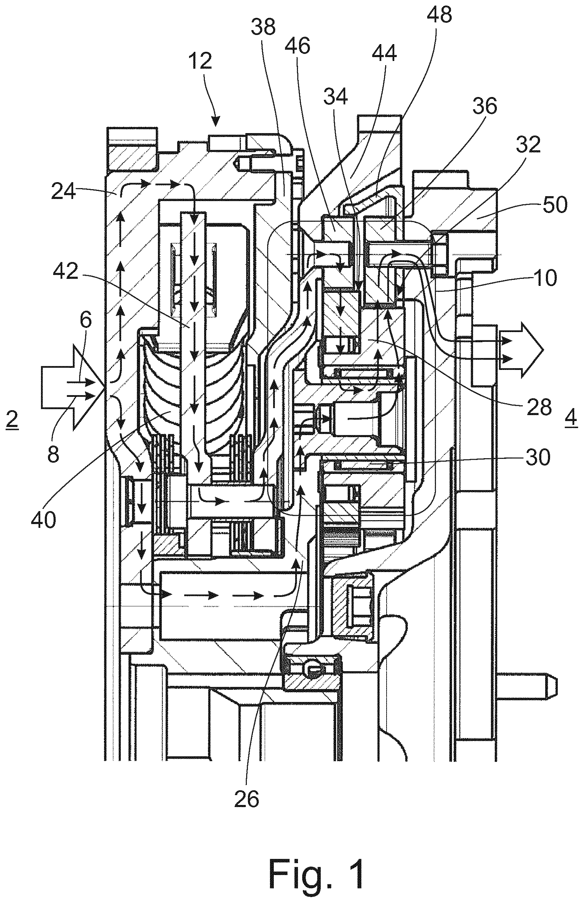

Der in Fig. 1 gezeigte Halbschnitt durch eine Torsionsschwingungsdämpferanordnung gemäß einem Ausführungsbeispiel der Erfindung zeigt eine Torsionsschwingungsdämpferanordnung, die dazu dient, eine Rotation von einer Antriebsseite 2 zu einer Abtriebsseite 4 zu übertragen. Zum Übertragen der Rotation und des von einem antriebsseitig angebundenen Antriebsaggregat erzeugten Drehmoments arbeitet die Torsionsschwingungsdämpferanordnung nach dem Prinzip der "Leistungsverzweigung", d. h. diese weist einen ersten Drehmomentübertragungsweg 6 und einen zweiten Drehmomentübertragungsweg 8 auf, wobei über den ersten Drehmomentübertragungsweg 6 ein erster Drehmomentanteil übertragen werden kann und wobei ein zweiter Drehmomentanteil über den zweiten Drehmomentübertragungsweg 8 übertragen wird, wie nachfolgend noch näher erläutert werden wird.

Das über die unterschiedlichen Drehmomentübertragungswege übertragene Drehmoment wird in einer Koppelanordnung 10, die vorliegend durch eine einem Planetengetriebe nachempfundene Anordnung von miteinander verzahnten drehbaren Zahnrädern gebildet wird, überlagert, sodass abtriebsseitig an einem an die Koppelanordnung 10 angebundenen abtriebsseitigen Bauteil das gesamte übertragene Drehmoment abgegriffen werden kann.

In dem ersten Drehmomentübertragungsweg 6 ist eine Phasenschieberanordnung 12 angeordnet, die eine Phasenverschiebung zwischen Torsionsschwingungen, die über den ersten Drehmomentübertragungsweg 6 zu der Koppelanordnung 10 übertragen werden und den Torsionsschwingungen, die über den zweiten Drehmomentübertragungsweg 8 zu der Koppelanordnung 10 übertragen werden, bewirkt. Die Phasenverschiebung wird insbesondere dadurch erreicht, dass sich in dem ersten Drehmomentübertragungsweg 6 ein schwingungsfähiges System befindet, über das das Drehmoment übertragen wird und welches eine Resonanzfrequenz aufweist, die unterhalb der Frequenz der mit der Torsionsschwingungsdämpferanordnung bei Leerlaufdrehzahl des Antriebs übertragenen Torsionsschwingungen liegt. Dies bewirkt, dass die am Eingang des schwingungsfähigen Systems angelegte Erreger- bzw. Torsionsschwingung zu der am Ausgang des Systems erhaltenen Schwingung phasenverschoben ist. Im idealisierten Fall eines ungedämpften schwingungsfähigen Systems beträgt die Phasenverschiebung ab der Resonanzfrequenz 180°.

Liegt die Resonanzfrequenz wie oben beschrieben, wäre im gesamten Drehzahlband, in dem die Torsionsschwingungsdämpferanordnung bei laufendem Antrieb betrieben wird, die Phasenverschiebung 180°. Diese würde im Fall der Übertragung von identischen Drehmomentanteilen über den ersten und zweiten Drehmomentübertragungsweg 6, 8 dazu führen, dass die das schwingungsfähige System anregenden Torsionsschwingungen sich vollständig kompensieren würden, sodass am Ausgang bzw. an der Abtriebsseite 4 der Torsionsschwingungsdämpferanordnung eine gleichmäßige, von Rotationsschwingungen vollständig befreite Drehung ohne Drehungleichförmigkeiten erhalten werden würde. Mit den in realen Systemen auftretenden Reibungsverlusten bzw. sonstigen Leistungsverlusten ist ein ungedämpftes schwingungsfähiges System nicht realisierbar. Daher werden die real realisierbaren Phasenverschiebungen des schwingungsfähigen Systems abhängig vom Abstand zur Resonanzfrequenz des schwingungsfähigen Systems unter 180° liegen und sich erst bei hohen Frequenzen dem Wert von 180° nähern. Nichtsdestotrotz kann unter Berücksichtigung der Dämpfungsverluste bzw. der Dämpfungseigenschaften des schwingungsfähigen Systems eine konstruktive Auslegung der leistungsverzweigenden Torsionsschwingungsdämpferanordnung derart vorgenommen werden, dass bei einer konstruktiv vorgegebenen Drehzahl die maximale erzielbare Kompensation der Drehungleichförmigkeiten erreicht wird.

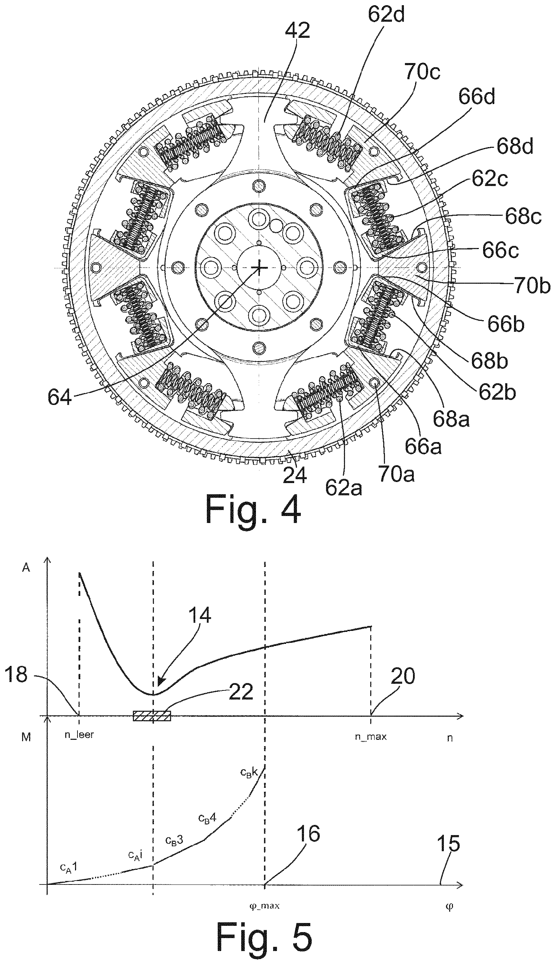

Fig. 5 zeigt beispielhaft eine Kennlinienauslegung, wie sie für eine Drehschwingungsdämpferanordnung der in Fig. 1 gezeigten Art gewählt werden kann. Dabei werde nachfolgend diejenige Drehzahl, bei der eine vollständige Auslöschung der Drehungleichförmigkeiten bzw. Torsionsschwingungen erfolgt, als Auslöschpunkt 14 bezeichnet.

Fig. 5 zeigt in dem oberen Graphen auf der Abszisse die Drehzahl eines Verbrennungsmotors in willkürlichen Einheiten. Die Ordinate zeigt in ebenfalls willkürlichen Einheiten die am Ausgang der Torsionsschwingungsdämpferanordnung verbleibende Drehungleichförmigkeit bzw. Torsionsschwingung. Diese erreicht am Auslöschpunkt 14 bzw. bei der dazu korrespondierenden Drehzahl ihr Minimum. In der oberen Darstellung ist weiterhin eine Leerlaufdrehzahl 18 des Verbrennungsmotors sowie eine maximale Drehzahl 20 desselben dargestellt.

Die untere Darstellung in Fig. 5 zeigt ein Beispiel für eine Federcharakteristik bzw. die Federsteifigkeit eines schwingungsfähigen Systems, das in der in Fig. 1 gezeigten Phasenschieberanordnung verwendet werden kann, in Abhängigkeit von einer relativen Verdrehung einer Primärseite des schwingungsfähigen Systems zu einer an die Koppelanordnung angebundene Sekundärseite des schwingungsfähigen Systems. Dieser Verdrehwinkel 15 ist durch die konstruktiven Rahmenbedingungen auf einen maximalen Verdrehwinkel 16 beschränkt. Die untere Darstellung in Fig. 5 zeigt auf der Abszisse den Verdrehwinkel 16 und auf der Ordinate das Drehmoment, das bei der dargestellten Federauslegung bei dem relativen Verdrehwinkel 16 ($\varphi$) übertragen wird. Bereiche, in denen die abschnittsweise gerade Kurve der Federsteifigkeit flach verläuft bzw. eine geringe Steigung aufweist, weisen eine geringe Federsteifigkeit auf, d. h. die Feder kann dort mit vergleichsweise geringem Kraftaufwand komprimiert werden.

Bei Verwendung eines derartigen schwingungsfähigen Systems zum Erzeugen einer Phasenverschiebung in der Torsionsschwingungsdämpferanordnung kann die Abstimmung des Systems, bei gleichbleibenden Massen, über die Federsteifigkeit der zwischen der Primärseite und der Sekundärseite des Systems angeordneten Federn beeinflusst werden. Dazu können beispielsweise mehrere seriell angeordnete Federn unterschiedlicher Steifigkeit oder Federn mit progressiven Steifigkeiten verwendete werden, sowie beliebige andere Lösungen, in denen die Federsteifigkeit in Abhängigkeit von dem Verdrehwinkel 15 variiert.

Im Allgemeinen sollte bei der Auslegung der in der unteren Darstellung von Fig. 5 dargestellten, vom Verdrehwinkel 15 abhängigen Federsteifigkeit die Abstimmung der Leistungsverzweigung, insbesondere die Drehmomentaufteilung zwischen dem ersten und zweiten Drehmomentübertragungsweg 6 und 8 berücksichtigt werden. Fig. 5 zeigt eine auch unter Berücksichtigung dieser Parameter vorteilhafte Auslegung der Kennlinie. Der Auslöschpunkt 14, der bei einem System mit einer herkömmlichen Phasenschieberanordnung an einer einzigen konstruktiv vorgegebenen Drehzahl erreicht wird, kann dabei insbesondere für die Festlegung der Federsteifigkeiten von Bedeutung sein. Vorteilhaft für das Fahrempfinden und die Kraftübertragung kann es sein, wenn bei Drehzahlen kurz oberhalb der Leerlaufdrehzahl 18, also noch vor dem Auslöschpunkt 14, die Federsteifigkeit vergleichsweise niedrig ist, wie dies in der unteren Darstellung von Fig. 5 angedeutet ist ist.

Eine geringe Federsteifigkeit oberhalb der Leerlaufdrehzahl führt zu einem weichen Ansprechen der Torsionsschwingungsdämpferanordnung und somit zu einem hohen Komfort beim Anfahren. Im Drehzahlbereich vom Auslöschpunkt 14 bis zur Maximaldrehzahl 20 führt eine stark progressive Federsteifigkeit sowohl zu einer hohen Entkopplungsgüte als auch zu einer effizienten Übertragung des maximalen Motordrehmoments bei begrenztem Verdrehwinkel.

Wie in Fig. 5 dargestellt, kann die Federsteifigkeit sowohl im Bereich zwischen der Leerlaufdrehzahl 18 und dem Auslöschpunkt 14 als auch zwischen dem Auslöschpunkt 14 und der Maximaldrehzahl 20 sowohl einstufig als auch mehrstufig dargestellt werden. Eine progressive oder mehrstufige Federcharakteristik lässt sich dabei beispielsweise verwirklichen, indem eine Mehrzahl von Federn unterschiedlicher Federsteifigkeit seriell entlang eines Umfangs angeordnet werden. Alternativ kann eine progressive Federcharakteristik auch durch die Wicklung der verwendeten Einzelfeder oder durch das koaxiale Anordnen von Federn unterschiedlicher Federstärke erreicht werden. Bei koaxialen oder parallel wirkenden Federn kann bei Federn gleicher Länge allein eine unterschiedliche Dimensionierung der Federn zu einer progressiven Federcharakteristik führen oder die Federn können in unterschiedlichen Längen ausgeführt sein, wodurch auch innerhalb eines einzelnen Federpakets eine wegabhängige Veränderung der Federsteifigkeit und damit eine Stufigkeit erzielt werden kann. Dabei ist die Anzahl der verwendeten Stufen bzw. Federnpakete zum Erzeugen der Federcharakteristik sowohl im Bereich zwischen der Leerlaufdrehzahl 18 und dem Auslöschpunkt 14 als auch in dem Bereich zwischen dem Auslöschpunkt 14 und der Maximaldrehzahl 20 im Prinzip beliebig.

Bei Ausführungsformen eines schwingungsfähigen Systems, das sowohl einen Außendämpfer mit radial außen liegenden Federn als auch einen Innendämpfer mit radial innen liegenden Federn aufweist, kann zur Umsetzung einer progressiven oder stufigen Federcharakteristik eine beliebige Kombination der Federn des Außendämpfers und des Innendämpfers verwendet werden. Ausführungen mit nur einem Dämpfer (ohne Innendämpfer oder ohne Außendämpfer) sind selbstverständlich ebenso möglich. Dabei kann in allen Fällen sowohl eine beliebige Kombination aus Reihen- und Serienschaltung der verwendeten Federn bzw. Federnpakete zum Erzielen der gewünschten Federcharakteristik verwendet werden.

Ausführungsbeispiele der vorliegenden Erfindung mit einer Phasenschieberanordnung 12, deren erzielbare maximale Phasenverschiebung von der Rotationsgeschwindigkeit der übertragenden Rotation abhängt, ermöglichen es auf die nachfolgend anhand der Fig. 1 bis 4 beschriebene Art und Weise, den Auslöschpunkt 14 drehzahlabhängig zu verändern, sodass eine optimale Auslöschung von Torsionsschwingungen bzw. Drehungleichförmigkeiten beispielsweise innerhalb des gesamten in Fig. 4 exemplarisch dargestellten Drehzahlbandes 22 erreicht werden kann.

Vor einer detaillierteren Beschreibung der Mechanismen, die zur Veränderung der Phasencharakteristik der Phasenschieberanordnung verwendet werden können, wird nachfolgend der Vollständigkeit halber erneut kurz die Funktionsweise der Torsionsschwingungsdämpferanordnung von Fig. 1 erläutert.

Dabei werden zunächst die Kraft- bzw. Drehmomentflüsse entlang der einzelnen Drehmomentübertragungswege 6 und 8 dargestellt, beginnend mit dem zweiten Drehmomentübertragungsweg 8. An der Antriebsseite 2 kann die Torsionsschwingungsdämpferanordnung an ein rotierendes Antriebsaggregat, beispielsweise die Schwungscheibe oder die Kurbelwelle eines Verbrennungsmotors angebunden werden. Die erwähnte Anbindung kann dabei, wie in Fig. 1 gezeigt, beispielsweise über eine Primärmasse 24, also eine scheibenförmige, massive Anordnung erfolgen, die gleichzeitig die Primärseite des schwingungsfähigen Systems zum Erzeugen der Phasenverschiebung bildet. Mit der Primärmasse 24 ist bei dem in Fig. 1 gezeigten Ausführungsbeispiel über eine Verschraubung ein Planetenradträger 26 verbunden, an dem entlang des Umfangs der im Wesentlichen rotationssymmetrischen Torsionsschwingungsdämpferanordnung eine Mehrzahl an dem Planetenradträger 26 drehbar befestigte Planetenräder 28 angeordnet sind. Das mittels eines Wälzlagers 30 an dem Planetenradträger 26 befestigte Planetenrad 28 weist vorliegend zwei Verzahnungen mit sich unterscheidenden Außendurchmessern auf. Eine abtriebsseitige Verzahnung 32 hat einen kleineren Durchmesser als eine antriebsseitige Verzahnung 34 des Planetenrads. Die abtriebsseitige Verzahnung 32 des Planetenrads befindet sich in einem Kämmeingriff mit einem abtriebsseitigen Hohlrad 36, welches an die Abtriebsseite angebunden ist. Somit erfolgt die Übertragung der Rotation bzw. des Drehmoments entlang des zweiten Drehmomentübertragungswegs 8 über die Primärmasse 24, den Planetenradträger 26, das Planetenrad 28 und über die abtriebsseitige Verzahnung 32 des Planetenrads auf das abtriebsseitige Hohlrad 36.

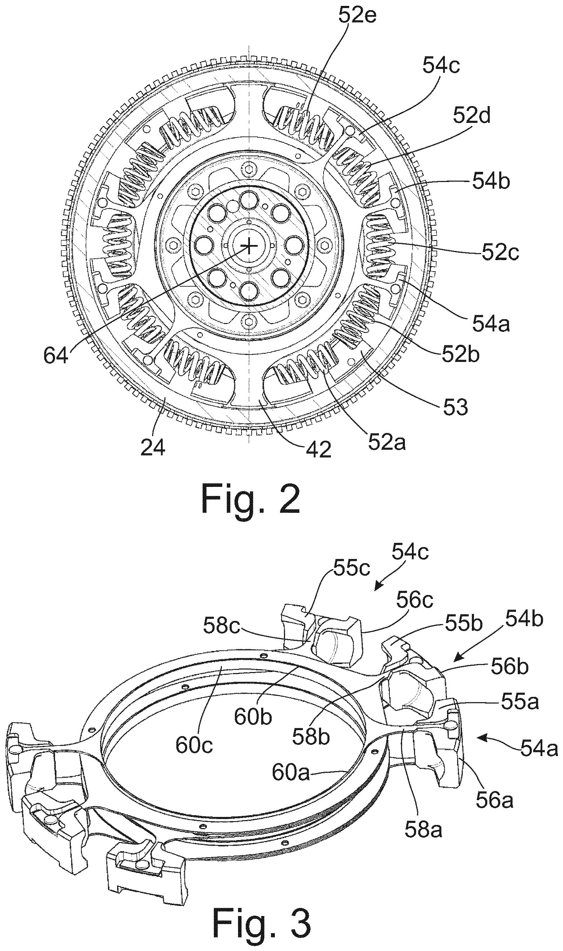

Im ersten Drehmomentübertragungsweg 6 befindet sich die ein schwingungsfähiges System umfassende Phasenschieberanordnung. Das heißt, der erste Drehmomentübertragungsweg 6 umfasst die Primärmasse 24, mit der bei dem in Fig. 1 dargestellten Ausführungsbeispiel zusätzlich ein Deckblech 38 verschraubt ist. Die die Primärmasse 24 umfassende Primärseite des schwingungsfähigen Systems ist über eine in den Fig. 2 und 3 detaillierter dargestellte Federanordnung mit einer Mehrzahl von Schraubenfedern 40 mit einer Nabenscheibe 42 verbunden, die bezüglich der Primärmasse 24 drehbar ist. Die Nabenscheibe 42 ist drehfest mit einem Hohlradträger 44 verschraubt, an dem wiederum mittels einer Verschraubung ein antriebsseitiges Hohlrad 46 angebracht ist, das in einem Kämmeingriff mit der antriebsseitigen Verzahnungen 34 des Planetenrads 28 steht. Der erste Drehmomentübertragungsweg, der bei dem vorliegenden Ausführungsbeispiel die Phasenschieberanordnung aufweist, verläuft somit über die Primärmasse 24, die Federanordnung mit den Federn 40, die Nabenscheibe 42, die mit diesem verschraubten Hohlradträger 44, das antriebsseitige Hohlrad 34 sowie über das Planetenrad 28 auf das abtriebsseitige Hohlrad 36.

Bei dem in Fig. 1 gezeigten Ausführungsbeispiel ist zum Zwecke der Abdichtung der geschmierten Planetenträgeranordnung, die im Wesentlichen die Koppelanordnung 10 zum Überlagern der beiden über den ersten Drehmomentübertragungsweg 6 und den zweiten Drehmomentübertragungsweg 8 übertragenen Drehmomentanteile dient, ferner ein gewinkeltes Dichtblech 48 mit dem abtriebsseitigen Hohlrad 36 verschraubt, welches sich von außen bis zu einem Außendurchmesser des antriebsseitigen Hohlrades 46 erstreckt.

Bei dem in Fig. 1 gezeigten Ausführungsbeispiel ist mit dem abtriebsseitigen Hohlrad 36 ferner ein Sekundärschwungrad 50 verbunden, welches bezüglich der Primärmasse 24 drehbar gelagert ist und beispielsweise die Eingangsseite für eine im Antriebsstrang nachfolgende trocken laufende Kupplung bilden kann. Es versteht sich von selbst, dass bei alternativen Ausführungsbeispielen an den Abtrieb bzw. die Abtriebsseite 4 andere Baugruppen bzw. Abtriebselemente anschließen können. Beispielsweise kann die Abtriebsseite 4 mit einer nasslaufenden, einer trockenlaufenden Einscheiben-, Doppel - oder Mehrscheibenkupplung verbunden sein, sowie direkt mit einer Getriebeeingangswelle eines Schaltgetriebes, eines Wandler- oder Stufenautomaten.

Wie aus Fig. 1 ersichtlich, ist der zweite Drehmomentübertragungsweg 8 im Wesentlichen steif, d. h. eine relative Verdrehung zwischen innerhalb dieses Drehmomentübertragungswegs angeordneten Komponenten erfolgt, abseits der unvermeidlichen elastischen Deformationen, nicht. Die über den zweiten Drehmomentübertragungsweg 8 übertragenen Torsionsschwingungen bzw. Drehungleichförmigkeiten werden daher ohne Phasenverschiebung bzw. Phasensprung und ungedämpft an die Koppelanordnung 10 übertragen.

Das im ersten Drehmomentübertragungsweg 6 angeordnete schwingfähige System, dessen Aufbau einem herkömmlichen Torsionsschwingungsdämpfer bzw. einem Zweimassenschwungrad ähnelt, erzeugt die für die Phasenschieberanordnung 12 charakteristische Phasenverschiebung zwischen der Primärseite des schwingungsfähigen Systems und der Sekundärseite desselben. Diese tritt insbesondere im normalen Betrieb immer auf, wenn die Resonanzfrequenz des schwingungsfähigen Systems unterhalb der Torsionsschwingung bei der Leerlaufdrehzahl 18 des Antriebsaggregats gewählt wird. Dies bedeutet, dass die Torsionsschwingungsanteile, die über den ersten Drehmomentübertragungsweg 6 zur Koppelanordnung 10 geleitet werden, eine Phasenverschiebung von maximal 180° bezüglich derjenigen Anteile aufweisen, die über den zweiten Drehmomentübertragungsweg 8 geleitet werden, sodass diese sich im Idealfall vollständig kompensieren. Die unerwünschte Drehschwingung wird also am Auslöschpunkt 14 idealisiert vollständig kompensiert.

Zur detaillierten Beschreibung der Funktionalität der Torsionsschwingungsdämpferanordnung werde zunächst angenommen, dass in der zu übertragenden Rotation keine Drehungleichförmigkeiten auftreten, Torsionsschwingungen an der Antriebsseite 2 also nicht vorhanden sind. In diesem Fall rotieren die Primärmasse 24, der Planetenradträger 26, die Nabenscheibe 42 sowie das antriebsseitige Hohlrad 46 mit identischer Drehzahl. Daher stehen auch die Planetenräder 28 still, was zur Folge hat, dass auch das abtriebsseitige Hohlrad 36 mit der Rotationsgeschwindigkeit der Primärmasse 24 rotiert.

Bei einem schnellen Anstieg der Rotationsgeschwindigkeit, wie sie beim Auftreten einer Drehungleichförmigkeit bzw. einer Rotationsschwingung auftritt, wird der zweite Drehmomentübertragungsweg dieser Anregung ohne Phasenverzögerung unmittelbar folgen, was eine Beschleunigung des Planetenradträgers 26 zur Folge hat. Dieser versucht, den Drehmoment- bzw. Rotationsgeschwindigkeitsanstieg über die Wechselwirkung des Planetenrads 28 mit dem abtriebsseitigen Hohlrad 36 der Koppelanordnung 10 und über das abtriebsseitige Hohlrad 36 auf die Abtriebsseite 4 zu übertragen.

Der hochfrequente schnelle Anstieg des Drehmoments bzw. der Drehzahl an der Primärmasse 24 führt jedoch im ersten Drehmomentübertragungsweg 6 dazu, dass die Schraubenfedern 40 komprimiert werden, und sich die Primärseite bezüglich der Sekundärseite, also die Primärmasse 24 bezüglich der Nabenscheibe 42 und dem antriebsseitigen Hohlrad 34 verdreht. Das heißt, das antriebsseitige Hohlrad 34 verbleibt zunächst in der gleichförmigen Rotationsfrequenz ohne Anregung durch die Rotationsschwingung, d. h. die Rotationsgeschwindigkeit des antriebsseitigen Hohlrades 34 ist zunächst geringer als diejenige des Planetenradträgers 26. Die Drehzahldifferenz führt dazu, dass das Planetenrad 28 rotiert und dabei das abtriebsseitige Hohlrad 36 mitnimmt, welches dadurch der mit der Anregungsfrequenz der Torsionsschwingung auftretenden ansteigenden Drehzahl des Planetenradträgers 26 nicht folgen kann.

Zusammengefasst werden so die Torsionsschwingungen an derjenigen Stelle, wo die beiden Drehmomente des ersten Drehmomentübertragungswegs 6 und des zweiten Drehmomentübertragungswegs 8 zusammengeführt werden, nämlich am Kämmeingriff der Planetenräder 28 mit den Hohlrädern 36 und 46, zumindest teilweise destruktiv überlagert.

Theoretisch möglich wären bei vollständig fehlender Dämpfung des schwingungsfähigen Systems Phasenverschiebungen von bis zu 180°, die jedoch aufgrund der unvermeidlichen Reibung zwischen den beteiligten Komponenten oder sogar einer bewussten Bedämpfung des Systems nicht erreicht werden. Nichtsdestotrotz lässt sich, wie vorstehend anhand von Fig. 5 ausgeführt, ein Auslöschpunkt 14 konstruktiv vorgeben, an dem die Dämpfung der Rotationsschwingung mit maximaler Güte erfolgen kann.

Mit den nachfolgend anhand der Fig. 2 bis 4 erläuterten Ausführungsbeispielen der vorliegenden Erfindung, die jeweils eine Phasenschieberanordnung mit einer von der Rotationsgeschwindigkeit abhängigen Phasencharakteristik aufweisen (d.h. die maximale bewirkte Phasenverschiebung ist von einer Rotationsgeschwindigkeit der übertragenden Rotation abhängig), kann der Bereich der maximal erzielbaren Kompensation auf ein endliches Drehzahlband ausgeweitet werden. Zu diesem Zweck weisen die anhand der Fig. 2 bis 4 detaillierter diskutierten schwingungsfähigen Systeme zum Erzeugen einer Phasenverschiebung drehzahlabhängige Resonanzfrequenzen auf, die auf die nachfolgend beschriebene Art und Weise erzeugt werden können.

Die drehzahladaptive Variation des Auslöschpunkts 14 basiert dabei bei den nachfolgend diskutierten Ausführungsbeispielen auf einer Veränderung der Resonanzfrequenz des schwingungsfähigen Systems. Diese wird überwiegend dadurch erreicht, dass drehzahladaptiv die Steifigkeit der verwendeten Federn bzw. der gesamten Federanordnung verändert wird. Dies kann beispielsweise durch ein drehzahlabhängiges Hemmen der Beweglichkeit einiger beweglicher bzw. schwingender Bauelemente des schwingungsfähigen Systems erfolgen.

Fig. 2 zeigt eine Aufsicht auf ein Ausführungsbeispiel eines schwingungsfähigen Systems, dessen Primärseite durch die Primärmasse 24 und dessen Sekundärseite durch die Nabenscheibe 42 gebildet wird. In Umfangsrichtung sind zwischen der Primärmasse 24 und der Nabenscheibe 42 eine Mehrzahl von Schraubenfedern bzw. Federanordnungen oder Federn 52a bis 52e angeordnet, die voneinander durch nachfolgend als Gleitschuhe bezeichnete Elemente getrennt sind.

Die Schraubenfeder 52a ist auf einer Seite unmittelbar an der Nabenscheibe 42 gelagert und auf der gegenüberliegenden Seite in einem Gleitschuh 53, der radial nach innen nicht fixiert oder gefangen ist, sodass dieser sich unter dem Einfluss der Fliehkraft radial nach außen bewegen kann um in direkten Kontakt mit einer nach radial innen weisenden Laufbahn an der Primärmasse 24 zu gelangen.

Demgegenüber sind die Gleitschuhe zur Lagerung der Schraubenfedern 52b bis 52e über Fliegeranordnungen 54a bis 54c radial nach innen angebunden. Die Fliegeranordnungen 54a bis 54c sind in Fig. 3 zur Veranschaulichung der Darstellung erneut in einer perspektivischen Ansicht ohne die die Fliegeranordnung umgebenden Komponenten dargestellt. Eine Fliegeranordnung 54a bis 54c besteht im Wesentlichen aus einem Gleitschuh 55a bis 55c zur Aufnahme der Feder, der an einem radial außen liegenden Ende der Fliegeranordnung 54a bis 54c angebracht ist. An dem radial äußeren Ende weisen die Gleitschuhe 55a bis 55c der Fliegeranordnungen 54a bis 54c Gleitflächen 56a bis 56c auf. Die Gleitschuhe 55a bis 55c sind an einem radial äußeren Ende an Stegen 58a bis 58c der Fliegeranordnungen angebracht, die sich bis zu einem inneren, rotationssymmetrischen Teil der Fliegeranordnung 54a bis 54c erstrecken, welcher zentriert und reibungsarm bezüglich einer Rotationsachse 64 der Torsionsschwingungsdämpferanordnung gelagert ist. Bei zunehmender Rotationsgeschwindigkeit verformen sich die Stege 58a bis 58c und/oder die ringförmigen Innenträger 60a bis 60c elastisch, sodass die Gleitschuhe 55a bis 55c sich nach radial außen bewegen. Ist die Rotationsgeschwindigkeit groß genug, gelangen die Gleitflächen 56a bis 56c in Gleitreibungskontakt mit einer Innenfläche der Primärmasse 24, und erhöhen dadurch die Steifigkeit des Federsystems, da sich das zur Erzeugung einer Kompression der Federn erforderliche Drehmoment erhöht. Dies ist einer der möglichen Mechanismen, wie Ausführungsbeispiele der Erfindung durch Verwendung einer der in den Fig. 2 und 3 exemplarisch dargestellten Fliegeranordnung eine drehzahladaptive Federcharakteristik bzw. Phasencharakteristik des schwingungsfähigen Systems erreichen können.

Mit anderen Worten werden bei den in Fig. 1 bis 3 gezeigten Ausführungsbeispielen aufgrund der Fliehkräfte, die auf das drehende System wirken, die Gleitschuhe 53 und 55a-c in den Fliegeranordnungen nach außen und zumindest teilweise an eine Innenlaufbahn der Primärmasse 24 gedrückt. Durch die hierbei entstehenden Reibungskräfte und durch die Radialkräfte aus dem Lastmoment erhöht sich die Reibung in den Gleitschuhen bzw. an den Gleitflächen 56a bis 56c und damit die wirksame Federsteifigkeit der so zumindest teilweise blockierten Federn.

Gemäß alternativen oder ergänzenden Mechanismen, deren grundsätzliche Konstruktion in den Fig. 2 und 3 ebenfalls exemplarisch gezeigt ist, kann die Steifigkeit der Federanordnung abhängig von der Rotationsgeschwindigkeit zusätzlich oder ergänzend dadurch verändert werden, dass sich die ringförmigen Innenträger 60a-c von zumindest zwei Fliegeranordnungen 54a und 54b in der zur Rotationsachse 64 parallelen axialen Richtung überlappen, wobei der radial innen liegende ringförmige Innenträger 60a eine geringere Steifigkeit, also eine höhere Deformierbarkeit aufweist als der radial außen liegende ringförmige Innenträger 60b. Ist bei dem in Fig. 3 dargestellten Ausführungsbeispiel der Innenträger 60a der Fliegeranordnung 54a weniger steif als der radial außerhalb angeordnete Innenträger 60b der Fliegeranordnung 54b, wird sich dieser bei zunehmender Rotationsgeschwindigkeit schneller verformen und nach außen dehnen. Dadurch wird zusätzlich zwischen dem Innenträger der Fliegeranordnung 54a und dem Innenträger der Fliegeranordnung 54b eine mit der Drehzahl zunehmende Reibung erzeugt, die als zusätzlicher Freiheitsgrad dazu genutzt werden kann, um die Resonanzfrequenz des schwingungsfähigen Systems drehzahladaptiv zu gestalten.

Das heißt bei den in den Fig. 2 und 3 beschriebenen Ausführungsbeispielen sind die Schraubendruckfedern 52a bis 52e des Federsatzes durch Gleitschuhe 53 und 55a-c gelagert, wobei ein oder mehrere Gleitschuhe 55a-c an sogenannten Fliegeranordnungen bzw. Fliegern 54a-c befestigt sind. Dadurch kann sich unterhalb einer Drehzahl, bei der die Gleitschuhe 54a-c in Kontakt mit der Primärmasse geraten, eine Reibungsreduktion für diese ergeben, da diese dann reibungsfrei bzw. reibungsarm zur Primärmasse gelagert werden. Ein radial innen angeordneter Flieger 54a kann eine geringere Steifigkeit besitzen als ein radial außerhalb angeordneter Flieger 54b. Dadurch kann alternativ und/oder ergänzend in Folge der unter Drehzahl auf die die Gleitschuhe wirkenden Fliehkräfte eine Verformung des Fliegers bzw. der Fliegeranordnung 54a-c bewirkt werden. Die Gleitschuhe 55a-c sowie die ringförmigen Innenträger 60a-c wandern unter dem Einfluss der Fliehkraft radial nach außen. Der innen liegende Flieger mit der geringeren radialen Federsteifigkeit als der äußere Flieger wird unter Fliehkraft stärker verformt. Verformt sich dieser soweit, dass eine Außenseite an der Innenseite des radial außen liegenden Fliegers anliegt, so kommt es zwischen den beiden Fliegern zur Reibung. Je nach Auslegung kann die Reibung so hoch werden, dass die beiden Flieger in Folge der Kräfte und der Widerstände, die aus der unteren Fliehkraft entstehenden unrunden Verformung resultieren, nicht mehr zu einer Relativbewegung zueinander angeregt werden können. Ist dies beispielsweise für die Fliegeranordnungen 54a und 54b des vorstehend beschriebenen Beispiels der Fall, ist die zwischen diesen beiden Fliegeranordnungen 54a und 54b angeordnete Feder 52c vollständig blockiert und kann nicht mehr elastisch deformiert werden, wodurch sich die Gesamtsteifigkeit der Federanordnung erhöht.

Die radiale Anordnung der Flieger ist in den Fig. 2 und 3 selbstverständlich lediglich beispielhaft dargestellt und kann den Anforderungen entsprechend beliebig variiert werden. Sofern zumindest ein Flieger mit geringerer radialer Federsteifigkeit zumindest teilweise radial innerhalb eines anderen Fliegers mit höherer radialer Federsteifigkeit angeordnet ist, kann die drehzahlabhängig erhöhte Reibung zwischen den beiden Fliegern genutzt werden, um die Resonanzfrequenz des schwingungsfähigen Systems abhängig von der Rotationsgeschwindigkeit, zu verändern. Selbstverständlich kann bei alternativen Ausführungsbeispielen eine andere Anzahl von Fliegern verwendet werden. Ebenso kann bei einer Mehrzahl von Fliegeranordnungen auch eine Mehrzahl von radialen Federsteifigkeiten verwendet werden, um die Reibung zwischen einzelnen Fliegern in mehreren Stufen anzupassen und um derart eine größere Anzahl von Freiheitsgraden zu gewinnen, die zur bedarfsgerechten Anpassung des schwingungsfähigen Systems zur Verfügung stehen.

Fig. 4 zeigt ein Ausführungsbeispiel eines schwingungsfähigen Systems, das eine Primärmasse 24 und eine Mehrzahl von zwischen der Primärmasse 24 und einer Nabenscheibe 42 angeordneten Federanordnungen bzw. Federn 62a bis 62d umfasst. Eine solche Federanordnung kann aus einer einzelnen Feder bestehen oder auch aus mehreren, die beispielsweise wie in Figur 4 gezeigt koaxial angeordnet bzw. auf andere Art und Weise parallel oder seriell geschalten sind. Der Einfachheit halber wird nachfolgen und im Zusammenhang mit diesem Dokument als Feder sowohl eine einzelne Feder als auch eine beliebige Anordnung beliebiger funktional zusammenwirkender Federn aus einer oder mehreren Federn bezeichnet. Wenngleich zur Vermeidung von Unwuchten das schwingungsfähige Systems von Fig. 4 symmetrisch ausgeführt ist, sodass funktionsähnliche und insbesondere radial verschiebbare Federn zumindest paarweise radial gegenüberliegend angeordnet sind, wird nachfolgend der Einfachheit halber nur eine der zueinander symmetrischen Hälften des Systems diskutiert.

Während eine radiale Position der Federn 62a und 62d, also ein radialer Abstand vom Zentrum bzw. der Rotationsachse 64 der Torsionsschwingungsdämferanordnung fest ist, sind die Federn 62b und 62c derart gelagert, dass sich ein radialer Abstand zwischen der Rotationsachse 64 und den Federn 62b und 62c drehzahlabhängig ändern kann. Um dies zu ermöglichen, sind die Federn 62b und 62c an beiden Enden in Federführungselementen 66a bis 66d gelagert, deren von den Federn 62b und 62c abgewandte Oberflächen an Führungsflächen 68a bis 68d anliegen bzw. sich an diesen abstützen. Die Führungsflächen 68a bis 68d befinden sich an frei rotierbaren Zwischenelementen 70a-c zwischen den Federn, die der Führung und Lagerung der einzelnen Federn 62a bis 62d dienen. Der relative Abstand zwischen den Führungsflächen 68a und 68b bzw. 68c und 68d verringert sich mit zunehmendem Abstand von der Rotationsachse 64. Durch diese Anordnung können sich die Federführungselemente 68a bis 68d zusammen mit den von diesen gelagerten Federn 62b und 62c unter dem Einfluss der Fliehkraft mit zunehmender Rotationsgeschwindigkeit radial nach außen bewegen, wodurch sich die Hebelverhältnisse in dem schwingungsfähigen System ändern.

Federn, die radial weiter außen angelenkt werden, haben eine erhöhte Steifigkeit des schwingungsfähigen Systems zur Folge, d.h. zum Erzeugen einer vorgegebenen Relativverdrehung zwischen der Primär- und der Sekundärseite ist ein höheres Drehmoment erforderlich. Näherungsweise kann zur Auslegung des schwingungsfähigen Systems beispielsweise eine quadratische Abhängigkeit der rotatorischen Federsteifigkeit $c_{rot}$ vom Anlenkradius r und der translatorischen Federsteifigkeit $c_{trans}$, angenommen werden, d. h.:

$$c_{rot} = c_{trans} \cdot r^2.$$

Mit anderen Worten wird bei dem in Fig. 4 gezeigten Ausführungsbeispiel ein Teil der Schraubendruckfedern bzw. der Federn 62a bis 62b des Federsatzes durch einfache Federführungselemente 66a-d bzw. Gleitschuhe gelagert, nämlich die Federn 62a und 62d. Die anderen Schraubendruckfedern 62b und 62c sind durch Federführungselemente 66a bis 66d gelagert, deren radiale Position verschiebbar ist. Die Federführungselemente 66a bis 66d stützten die Federn 62b und 62c sowohl nach radial innen als auch nach radial außen ab. Der Abstand der Führungsflächen 68a bis 68d für die Federführungselemente 66a bis 66d verjüngt sich nach radial außen, wobei der Winkel der Führungsflächen zueinander beispielsweise so groß gewählt werden kann, dass keine Selbsthemmung auftritt. Nach radial außen ist ein Anschlag vorgesehen, ebenso wie nach radial innen.

Zum Erzeugen eines konstanten Anteils einer Federcharakteristik sind zusätzlich an den Zwischenelementen 70a und 70c Federn 62a und 62d befestigt, die bezüglich der Rotationsachse keine Relativbewegung ausführen können. Zur Vermeidung von Unwuchten kann die Gesamtanordnung symmetrisch ausgeführt werden, sodass, wie in Fig. 4 dargestellt, radial verschiebbare Federn zumindest paarweise radial gegenüberliegend angeordnet sind. Bei dem in Fig. 4 gezeigten Ausführungsbeispiel sind vier radial verschiebbare Federsätze und vier statische Federsätze dargestellt. Selbstverständlich ist diese Anzahl bzw. das Verhältnis variabel, sodass bei alternativen Ausführungsbeispielen eine beliebige Kombination von Federn, deren Abstand zur Rotationsachse 64 in der radialen Richtung veränderlich ist mit solchen, deren diesbezüglicher Abstand fix ist, verwendet werden kann. Dadurch kann das Intervall, in dem die Torsionsfedersteifigkeit variierbar ist, indem also die Phasencharakteristik der Phasenschieberanordnung veränderlich ist, nahezu beliebig angepasst werden.

Anders ausgedrückt ist bei dem in Fig. 4 gezeigten Ausführungsbeispiel der Abstand der Federn 62b und 62c zur Drehachse 64 des Gesamtsystems variabel. In Folge der unter Drehzahl auf die Federn 62b und 62c wirkenden Fliehkräfte werden diese nach außen gedrückt, wodurch sich die Hebelverhältnisse der Torsionsdämpfereinrichtung ändern. Je weiter außen die Federn angelenkt werden, desto höher ist die Torsionssteifigkeit des schwingungsfähigen Systems. Da sich die Führungsbahn der Federn 62b und 62c, die vorliegend als Schraubendruckfedern ausgeführt sind, nach außen hin verjüngt, wird keine zusätzliche Feder zur Einstellung der Kennlinie benötigt. Da die Fliehkräfte nach außen wirken, stellt sich in Abhängigkeit von der Drehzahl ein Gleichgewichtszustand ein, der die Federsteifigkeit bei der gegebenen Drehzahl definiert. Die Federn 62b und 62c können eine Abstützung sowohl nach radial innen als auch nach radial außen erfahren. Die äußere Abstützung in den Federführungselementen ist vorteilhaft, da die Federn bei hohen Drehzahlen durch die Fliehkräfte nach außen gedrückt werden. Nach innen ist eine Abstützung vorteilhaft, da sich die Federn sonst im Stillstand möglicherweise aufgrund ihrer Federkraft und der Ausgestaltung der Führungsbahnen nach innen aus dem Gleitschuh drücken könnten.

Wenngleich in den vorhergehenden Abschnitten überwiegend im Zusammenhang mit Verbrennungsmotoren für Kraftfahrzeuge diskutiert, versteht es sich von selbst, dass alternative Ausführungsformen von Torsionsschwingungsdämpferanordnungen in nahezu beliebigen Antriebssträngen verwendet werden können, um die Gleichförmigkeit der Bewegung, die über die Torsionsschwingungsdämpferanordnung übertragen wird, zu erhöhen. Dies kann beispielsweise auch bei industriellen und stationär betriebenen Maschinen oder dergleichen von großem Vorteil sein, wenn es auf eine Gleichmäßigkeit der Bewegung ankommt. Weitere Anwendungsbeispiele sind Hybrid- angetriebene Fahrzeuge, also Fahrzeuge, bei denen die Antriebsleistung alternativ oder gleichzeitig von Verbrennungskraftmaschinen und Elektromotoren zur Verfügung gestellt wird. Auch wenn in den vorhergehenden Ausführungsbeispielen drei spezielle Möglichkeiten diskutiert wurden, wie eine Phasencharakteristik einer Phasenschieberanordnung abhängig von der Rotationsgeschwindigkeit in einer Torsionsschwingungsdämpferanordnung beeinflusst bzw. eingestellt werden kann, versteht es sich von selbst, dass bei alternativen Ausführungsbeispielen die Drehzahlabhängigkeit der mit der Phasenschieberanordnung erzielbaren maximalen Phasenverschiebung auf beliebige andere Art und Weise erfolgen kann, um dieselben Vorteile zu erzielen.

Bezugszeichen

| 2 | Antriebsseite |
| 4 | Abtriebsseite |
| 6 | erster Drehmomentübertragungsweg |
| 8 | zweiter Drehmomentübertragungsweg |
| 10 | Koppelanordnung |
| 12 | Phasenschieberanordnung |
| 14 | Auslöschpunkt |
| 15 | Verdrehwinkel |
| 16 | maximaler Verdrehwinkel |
| 18 | Leerlaufdrehzahl |
| 20 | maximale Drehzahl |
| 22 | Drehzahlband |
| 24 | Primärmasse |
| 26 | Planetenradträger |
| 28 | Planetenrad |
| 30 | Wälzlager |
| 32 | abtriebsseitige Verzahnung |
| 34 | antriebsseitige Verzahnung |
| 36 | abtriebsseitiges Hohlrad |
| 38 | Deckblech |
| 40 | Schraubenfeder |
| 42 | Nabenscheibe |
| 44 | Hohlradträger |
| 46 | antriebsseitiges Hohlrad |
| 48 | Dichtblech |
| 50 | Sekundärschwungrad |
| 52a-e | Federn |
| 53 | Gleitschuh |
| 54a-c | Fliegeranordnung |
| 55a-c | Gleitschuhe |
| 56a-c | Gleitflächen |
| 58a-c | Stege |
| 60a-c | ringförmige Innenträger |
| 62a-d | Federn |
| 64 | Rotationsachse |
| 66a-d | Federführungselemente |
| 68a-d | Führungsflächen |
| 70a-c | Zwischenelement |

**Patentansprüche**

1. Torsionsschwingungsdämpferanordnung zum Übertragen einer Rotation von einer Antriebsseite (2) zu einer Abtriebsseite (4), mit folgenden Merkmalen:

einem zwischen der Antriebsseite (2) und der Abtriebsseite (4) angeordneten ersten Drehmomentübertragungsweg (6) zum Übertragen eines ersten Drehmomentanteils;
einem zwischen der Antriebsseite (2) und der Abtriebsseite (4) angeordneten zweiten Drehmomentübertragungsweg (8) zum Übertragen eines zweiten Drehmomentanteils;
einer Koppelanordnung (10) zum Überlagern des ersten Drehmomentanteils und des zweiten Drehmomentanteils;
einer Phasenschieberanordnung (12) zum Bewirken einer Phasenverschiebung zwischen Torsionsschwingungen, die über den ersten Drehmomentübertragungsweg (6) zu der Koppelanordnung übertragen werden und den Torsionsschwingungen, die über den zweiten Drehmomentübertragungsweg (8) zu der Koppelanordnung übertragen werden und, dass

die Phasenschieberanordnung (12) eine mit der Phasenschieberanordnung (12) erzielbare maximale Phasenverschiebung bewirkt, die von einer Rotationsgeschwindigkeit der übertragenden Rotation abhängig ist,

bei der die Phasenschieberanordnung (12) ein schwingfähiges System mit einer mit der Antriebsseite (4) gekoppelten Primärseite und einer bezüglich der Primärseite um eine Rotationsachse drehbaren Sekundärseite umfasst, die an die Koppelanordnung (10) angebunden ist, wobei eine Drehung der Primärseite gegenüber der Sekundärseite gegen die Wirkung einer zwischen der Primärseite und der Sekundärseite angeordneten Federanordnung (52a-e; 62a-d) erfolgt,

bei der das schwingfähige System eine von der Rotationsgeschwindigkeit abhängige Resonanzfrequenz aufweist,

bei der sich eine Steifigkeit der Federanordnung (52a-e; 62a-d) abhängig von der Rotationsgeschwindigkeit verändert,

bei der die Federanordnung (52a-e; 62a-d) eine Mehrzahl von Federn umfasst, wobei zumindest eine der Federn (62b, 62c) derart gelagert ist, dass sich ein radialer Abstand in einer auf der Rotationsachse (64) senkrecht stehenden radialen Richtung zwischen der Rotationsachse (64) und der einen Feder (62b, 62c) in Abhängigkeit von der Rotationsgeschwindigkeit verändern kann, **dadurch gekennzeichnet, dass**

die zumindest eine Feder (62b, 62c) an beiden Enden der Feder in Gleitschuhen gelagert ist, deren der Feder (62b, 62c) abgewandte Oberflächen an sich in der radialen Richtung erstreckenden Führungsflächen (68a-d) anliegen, deren relativer Abstand sich mit zunehmendem Abstand von der Rotationsachse (64) verringert.

2. Torsionsschwingungsdämpferanordnung nach Anspruch 1, bei der der radiale Abstand zwischen der Rotationsachse (64) und der einen Feder (62b, 62c) um einen Adaptionsweg veränderbar ist, wobei die Größe des Adaptionsweges mindestens 5% eines minimalen radialen Abstandes zwischen der einen Feder (62b, 62c) und der Rotationsachse (64) beträgt.

3. Torsionsschwingungsdämpferanordnung nach Anspruch 2, bei der die Federanordnung (52a-e) eine Mehrzahl von Federn umfasst, die entlang eines Umfangs in Reihe angeordnet sind, wobei zumindest eine erste Feder (52c) und eine der ersten Feder benachbarte zweite Feder (52d) in der Umfangsrichtung durch eine erste Fliegeranordnung (54b) voneinander getrennt sind, die mit einer von der Rotationsgeschwindigkeit abhängigen Kopplungsstärke an die Primärseite und/oder Sekundärseite anbindbar ist.

4. Torsionsschwingungsdämpferanordnung nach Anspruch 3, bei der die Anbindung an die Primärseite kraftschlüssig ist.

5. Torsionsschwingungsdämpferanordnung nach Anspruch 3 oder 4, die ferner eine zu der zweiten Feder (52d) benachbarte dritte Feder (52e) aufweist, wobei die zweite Feder (52d) und die dritte Feder (52e) in der Umfangsrichtung durch eine zweite Fliegeranordnung (54c) voneinander getrennt sind, wobei die erste Fliegeranordnung (54b) und die zweite Fliegeranordnung (54c) mit einer von der Rotationsgeschwindigkeit abhängigen Kopplungsstärke miteinander koppelbar sind.

6. Torsionsschwingungsdämpferanordnung nach einem der vorhergehenden Ansprüche, bei der die Kopplungsanordnung (10) eine Planetengetriebeanordnung umfasst.

7. Torsionsschwingungsdämpferanordnung nach Anspruch 6, **dadurch gekennzeichnet, dass** der zweite Drehmomentübertragungsweg (8) an einen Planetenradträger (26) der Planetengetriebeanordnung angebunden ist, an dem eine Mehrzahl von bezüglich dem Planetenradträger (26) drehbare Planetenrädern (28) oder Planetenradsegmente befestigt sind.

8. Torsionsschwingungsdämpferanordnung nach Anspruch 7, bei der
ein sich in einem Kämmeingriff mit den Planetenrädern (28) befindliches antriebsseitiges Hohlrad (34) an den ersten Drehmomentübertragungsweg (6) angebunden ist.

9. Torsionsschwingungsdämpferanordnung nach Anspruch 7 oder 8, bei dem ein sich in einem Kämmeingriff mit den Planetenrädern (28) befindliches abtriebsseitiges Hohlrad (36) an die Abtriebsseite (4) angebunden ist.

**Claims**

1. Torsional vibration damper arrangement for transmitting a rotation from a drive side (2) to an output side (4), having the following features:

a first torque transmission path (6), arranged between the drive side (2) and the output side (4), for transmitting a first torque portion;

a second torque transmission path (8), arranged between the drive side (2) and the output side (4), for transmitting a second torque portion; a clutch arrangement (10) for superimposing the first torque portion and the second torque portion;

a phase shifter arrangement (12) for bringing about a phase shift between torsional vibrations which are transmitted to the clutch arrangement via the first torque transmission path (6) and the torsional vibrations which are transmitted to the clutch arrangement via the second torque transmission path (8), and wherein

the phase shifter arrangement (12) brings about a maximum phase shift which can be achieved with the phase shifter arrangement (12) and which is dependent on a rotational speed of the transmitting rotation,

in which the phase shifter arrangement (12) comprises a system which is capable of vibrating and which has a primary side which is coupled to the drive side (4) and a secondary side which can rotate with respect to the primary side about a rotational axis and which is connected to the clutch arrangement (10), wherein a rotation of the primary side with respect to the secondary side takes place counter to the effect of a spring arrangement (52a-e; 62a-d) which is arranged between the primary side and the secondary side,

in which the system which is capable of vibrating has a resonant frequency which is dependent on the rotational speed,

in which rigidity of the spring arrangement (52a-e; 62a-d) changes as a function of the rotational speed,

in which the spring arrangement (52a-e; 62a-d) comprises a multiplicity of springs, wherein at least one of the springs (62b, 62c) is mounted in such a way that a radial distance can change, in a radial direction which is perpendicular to the rotational axis (64), between the rotational axis (64) and the one spring (62b, 62c) as a function of the rotational speed, **characterized in that** the at least one spring (62b, 62c) is mounted in sliding shoes at both ends of the spring, the surfaces of which sliding shoes which face away from the spring (62b, 62c) bear on guide faces (68a-d) which extend in the radial direction and whose relative distance decreases as the distance from the rotational axis (64) increases.

2. Torsional vibration damper arrangement according to Claim 1, in which the radial distance between the rotational axis (64) and the one spring (62b, 62c) can be changed by an adaptation path, wherein the size of the adaptation path is at least 5% of a minimum radial distance between the one spring (62b, 62c) and the rotational axis (64).

3. Torsional vibration damper arrangement according to Claim 2, in which the spring arrangement (52a-e) comprises a multiplicity of springs which are in series along a circumference, wherein at least a first spring (52c) and a second spring (52d) adjacent to the first spring are separated from one another in the circumferential direction by a first flier arrangement (54b) which can be connected to the primary side and/or secondary side with a coupling strength which is dependent on the rotational speed.

4. Torsional vibration damper arrangement according to Claim 3, in which the connection to the primary side is frictionally locking.

5. Torsional vibration damper arrangement according to Claim 3 or 4, which also has a third spring (52e) which is adjacent to the second spring (52d), wherein the second spring (52d) and the third spring (52e) are separated from one another in the circumferential direction by a second flier arrangement (54c), wherein the first flier arrangement (54b) and the second flier arrangement (54c) can be coupled to one another with a coupling strength which is dependent on the rotational speed.

6. Torsional vibration damper arrangement according to one of the preceding claims, in which the clutch arrangement (10) comprises a planetary gear assembly.

7. Torsional vibration damper arrangement according to Claim 6, **characterized in that** the second torque transmission path (8) is connected to a planetary gear carrier (26) of the planetary gear assembly, to which planetary gear carrier (26) a multiplicity of planetary gears (28) or planetary gear segments which can rotate with respect to the planetary gear carrier (26) are attached.

8. Torsional vibration damper arrangement according to Claim 7, in which a drive-side ring gear (34) which is located in meshing intervention with the planetary gears (28) is connected to the first torque transmission path (6).

9. Torsional vibration damper arrangement according to Claim 7 or 8, in which an output-side ring gear (36) which is located in meshing intervention with the planetary gears (28) is connected to the output side (4).

**Revendications**

1. Ensemble amortisseur d'oscillations de torsion pour le transfert d'une rotation d'un côté d'entraînement (2) à un côté de sortie (4), comprenant les caractéristiques suivantes:

un premier trajet de transfert de couple (6) disposé entre le côté d'entraînement (2) et le côté de sortie (4), pour transférer une première proportion du couple ;

un deuxième trajet de transfert de couple (8) disposé entre le côté d'entraînement (2) et le côté de sortie (4), pour transférer une deuxième proportion du couple ;

un agencement d'accouplement (10) pour superposer la première proportion du couple et la deuxième proportion du couple ;

un agencement de déphaseur (12) pour provoquer un déphasage entre des oscillations de torsion qui sont transmises par le biais du premier trajet de transfert de couple (6) à l'agencement d'accouplement et les oscillations de torsion qui sont transmises à l'agencement d'accouplement par le biais du deuxième trajet de transfert de couple (8), et en ce que

l'agencement de déphaseur (12) provoque un déphasage maximal pouvant être obtenu avec l'agencement de déphaseur (12), qui dépend d'une vitesse de rotation de la rotation de transfert, dans lequel l'agencement de déphaseur (12) comprend un système oscillant avec un côté primaire accouplé au côté d'entraînement (4) et un côté secondaire pouvant tourner par rapport au côté primaire autour d'un axe de rotation, qui est raccordé à l'agencement d'accouplement (10), une rotation du côté primaire par rapport au côté secondaire s'effectuant à l'encontre de l'action d'un agencement de ressorts (52a-e, 62a-d) disposé entre le côté primaire et le côté secondaire,

dans lequel le système oscillant présente une fréquence de résonance dépendant de la vitesse de rotation,

dans lequel une rigidité de l'agencement de ressorts (52a-e, 62a-d) varie en fonction de la vitesse de rotation,

dans lequel l'agencement de ressorts (52a-e, 62a-d) comprend une pluralité de ressorts, au moins l'un des ressorts (62b, 62c) étant supporté de telle sorte qu'une distance radiale dans une direction radiale perpendiculaire à l'axe de rotation (64) entre l'axe de rotation (64) et ledit un ressort (62b, 62c) puisse varier en fonction de la vitesse de rotation,

**caractérisé en ce que**

l'au moins un ressort (62b, 62c) est supporté au niveau des deux extrémités du ressort dans des patins dont les surfaces opposées au ressort (62b, 62c) s'appliquent contre des surfaces de guidage (68a-d) s'étendant dans la direction radiale, dont la distance relative diminue en fonction de l'augmentation de la distance à l'axe de rotation (64).

2. Ensemble amortisseur d'oscillations de torsion selon la revendication 1, dans lequel la distance radiale entre l'axe de rotation (64) et l'un des ressorts (62b, 62c) peut varier d'une course d'adaptation, l'ampleur de la course d'adaptation valant au moins 5 % d'une distance radiale minimale entre ledit un ressort (62b, 62c) et l'axe de rotation (64).

3. Ensemble amortisseur d'oscillations de torsion selon la revendication 2, dans lequel l'agencement de ressorts (52a-e) comprend une pluralité de ressorts qui sont disposés en rangée le long d'une périphérie, au moins un premier ressort (52c) et un deuxième ressort (52d) adjacent au premier ressort étant séparés l'un de l'autre dans la direction périphérique par un premier agencement d'éléments volants (54b) qui peut être raccordé au côté primaire et/ou au côté secondaire avec une force d'accouplement dépendant de la vitesse de rotation.

4. Ensemble amortisseur d'oscillations de torsion selon la revendication 3, dans lequel le raccordement au côté primaire est un raccordement par force.

5. Ensemble amortisseur d'oscillations de torsion selon la revendication 3 ou 4, qui présente en outre un troisième ressort (52e) adjacent au deuxième ressort (52d), le deuxième ressort (52d) et le troisième ressort (52e) étant séparés l'un de l'autre dans la direction périphérique par un deuxième agencement d'éléments volants (54c), le premier agencement d'éléments volants (54b) et le deuxième agencement d'éléments volants (54c) pouvant être accouplés l'un à l'autre par une force d'accouplement dépendant de la vitesse de rotation.

6. Ensemble amortisseur d'oscillations de torsion selon l'une quelconque des revendications précédentes, dans lequel l'agencement d'accouplement (10) comprend un agencement d'engrenage planétaire.

7. Ensemble amortisseur d'oscillations de torsion selon la revendication 6, **caractérisé en ce que** le deuxième trajet de transfert de couple (8) est raccordé à un porte-satellites (26) de l'agencement d'engrenage planétaire, au niveau duquel sont fixés une pluralité de pignons planétaires (28) ou de segments planétaires pouvant tourner par rapport au porte-satellites (26).

8. Ensemble amortisseur d'oscillations de torsion selon la revendication 7, dans lequel une couronne dentée (34) du côté de l'entraînement, se trouvant en engagement d'engrènement avec les pignons planétaires (28), est raccordée au premier trajet de transfert de couple (6).

9. Ensemble amortisseur d'oscillations de torsion selon la revendication 7 ou 8, dans lequel une couronne dentée (36) du côté de la sortie, se trouvant en engagement d'engrènement avec les pignons planétaires (28), est raccordée au côté de sortie (4).

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- DE 102011075244 A1
- DE 102011075243 A1